# EUROPÄISCHE PATENTANMELDUNG

(11) **EP 1 947 375 A1**
(43) Veröffentlichungstag der Anmeldung: **23.07.2008**
(21) Anmeldenummer: 07000817.2
(22) Anmeldetag: 16.01.2007
(51) Int. Cl.: F16L 19/02

(54) **Rohrverbindung**

(71) Anmelder: SIEMENS AKTIENGESELLSCHAFT, 80333 München (DE)
(72) Erfinder: Fischer, Marcus, 56589 Niederbreitbach (DE)

(57) **Zusammenfassung**

Die Erfindung betrifft eine Rohrverbindung (26, 28; 70; 72) mit zwei Rohrelementen (32, 34; 74, 76; 94, 96) und einem um zumindest ein Rohrelement (32, 34; 74, 76; 94, 96) geführten Spannelement (36), das zu einem Pressen der Rohrelemente (32, 34; 74, 76; 94, 96) gegeneinander durch eine Spannbewegung des Spannelements (36) in Umfangsrichtung relativ zu beiden Rohrelementen (32, 34; 74, 76; 94, 96) vorgesehen ist, Es wird vorgeschlagen, dass die Rohrverbindung (26, 28; 70; 72) ein Formschlussmittel (56; 78; 88) aufweist zum formschlüssigen Verbinden der beiden Rohrelemente (32, 34; 74, 76; 94, 96) in Umfangsrichtung miteinander. Es wird eine montagefreundliche Rohrverbindung (26, 28; 70; 72) erreicht, mit der eine Torsion einer Rohrleitung beim Befestigen der Rohrelemente (32, 34; 74, 76; 94, 96) aneinander gering gehalten, insbesondere vermieden werden kann.

## Beschreibung

Die Erfindung betrifft eine Rohrverbindung mit zwei Rohrelementen und einem um zumindest ein Rohrelement geführten Spannelement, das zu einem Pressen der Rohrelemente gegeneinander durch eine Spannbewegung des Spannelements in Umfangsrichtung relativ zu beiden Rohrelementen vorgesehen ist.

Gasturbinen sind mit einer Anzahl von Brennern ausgestattet, die ringförmig an einer Brennkammer angeordnet sein können. Die Brenner sind über ein Rohrleitungssystem mit einer Brennstoffversorgung verbunden, wobei jeder Brenner beispielsweise über eine sogenannte Stichleitung an eine ringartige Verteilerleitung angeschlossen ist, die wiederum mit einer zentralen Versorgungsleitung verbunden ist.

Zur regelmäßigen Wartung der Brenner müssen diese von der Stichleitung jeweils getrennt werden. Zur einfachen Demontage und Montage der Brenner an die Stichleitungen sind die Brenner jeweils über eine Rohrverbindung mit der Stichleitung verbunden, bei der zwei Rohrelemente mittels einer Überwurfmutter zusammengepresst werden und beispielsweise ein konischer Presssitz für eine Abdichtung der beiden Rohrelemente gegeneinander sorgt. Die Rohrelemente sind wiederum an der Stichleitung bzw. den Brenner angeschweißt, so dass eine dichte Verbindung entsteht. Solche montagefreundlichen Verbindungen werden bevorzugt, da mit ihr lose Teile, wie Muttern, Schrauben usw., vermieden werden können und keinerlei Dichtung ausgewechselt werden muss bei mehrmaligem Öffnen und Schließen der Verbindung. Es müssen lediglich die Rohrelemente zusammengefügt und die Überwurfmutter angezogen werden.

Beim Anziehen der Überwurfmutter kann das Problem auftauchen, dass eines der Rohrelemente ein Stück weit mit der Überwurfmutter mitdreht und auf diese Weise ein unerwünschtes Torsionsmoment auf eine Leitung, beispielsweise die Stichleitung, aufgebracht wird. Zur Lösung dieses Problems ist es bekannt, an der mitdrehenden Rohrleitung eine Flanschverbindung vorzusehen, bei dessen Lösung ein Flansch drehbar gehalten ist, so dass die mitdrehende Rohrleitung zusammen mit dem Flansch drehbar ist, ohne einem Torsionsmoment unterworfen zu sein. Nun kann die Rohrverbindung mit der Überwurfmutter geschlossen werden, wobei die gelöste Flanschverbindung ein Verdrehen der Rohrleitung zulässt, und abschließend wird die Flanschverbindung wieder festgezogen.

Es ist die Aufgabe der vorliegenden Erfindung, eine montagefreundliche Rohrverbindung anzugeben, mit der eine Torsion eines Rohrleitung beim Befestigen der Rohrelemente aneinander gering gehalten, insbesondere vermieden werden kann.

Diese Aufgabe wird gelöst durch eine Rohrverbindung der eingangs genannten Art, die erfindungsgemäß ein Formschlussmittel aufweist zum formschlüssigen Verbinden der beiden Rohrelemente in Umfangsrichtung miteinander. Es kann ein Verdrehen der beiden Rohrelemente relativ zueinander verringert, insbesondere verhindert werden, wodurch das Aufbringen einer Torsion auf eines der beiden Rohrelemente bei einem Schließen der Rohrverbindung gering gehalten oder vermieden werden kann.

Die formschlüssige Verbindung der beiden Rohrelemente aneinander kann unmittelbar durch das Formschlussmittel oder mittelbar über ein oder mehrere weitere Elemente erfolgen. Das Formschlussmittel dient zweckmäßigerweise zum formschlüssigen Stoppen eines Mitdrehens der Rohrelemente mit der Spannbewegung. Das Spannelement ist zweckmäßigerweise in seiner Spannbewegung unabhängig vom Formschlussmittel bewegbar. Es kann in Form eines Gewindeelements, beispielsweise einer Überwurfmutter, eines Rastelements oder in Form eines anderen Elements ausgestaltet sein, das die beiden Rohrelemente durch eine Spannbewegung in Umfangsrichtung relativ zu den beiden Rohrelementen gegeneinander drückt. Einem Montagefehler kann entgegengewirkt werden, wenn der Formschluss dergestalt ist, dass die beiden Rohrelemente durch das Formschlussmittel in beide Drehrichtungen miteinander verbunden sind. Eine einfache und sichere Montage kann erreicht werden, wenn die beiden Rohrelemente im verbundenen Zustand ineinander greifen und der Formschluss insbesondere durch ein Ineinanderstecken der Rohrelemente zu Stande kommt.

In einer vorteilhaften Ausgestaltung der Erfindung ist das Formschlussmittel zum formschlüssigen Verbinden der beiden Rohrelemente in Umfangsrichtung miteinander während der Spannbewegung des Spannelements vorgesehen. Hierdurch kann ein Mitdrehen der beiden Rohrelemente mit der Spannbewegung bereits während der Spannbewegung vermieden werden.

Zum Montieren werden die Rohrelemente zweckmäßigerweise aneinander gefügt, zweckmäßigerweise ineinander gesteckt. Eine einfache Montage kann erreicht werden, wenn die beiden Rohrelemente durch das Formschlussmittel in einer Vielzahl von verschiedenen Positionen relativ zueinander formschlüssig aneinander fügbar sind. Die Rohrelemente müssen nicht in beispielsweise eine einzige Montageposition relativ zueinander gebracht werden, so dass ein aufwendiges Drehen eines der Rohrelemente, und mit ihm eventuell eines ganzen Rohrstrangs, vor einem Ineinanderfügen nicht notwendig ist. Die Positionen sind jeweils zweckmäßigerweise in Umfangsrichtung zueinander verdrehte Positionen. Die Umfangsrichtung kann durch die in Axialrichtung ausgerichtete Rohrachse der Rohrelemente vorgegeben sein. Die Positionen sind vorteilhafterweise diskrete Positionen. Das Formschlussmittel lässt zweckmäßigerweise zumindest vier, insbesondere zumindest zwölf unterschiedliche Positionen zu, in denen die Rohrelemente formschlüssig ineinanderfügbar sind.

Ein einfaches Ineinanderfügen der beiden Rohrelemente in verschiedenen diskreten Positionen kann erreicht werden, wenn das Formschlussmittel mehrere gleiche Formschlusselemente aufweist.

Eine einfache Herstellung eines mehrere Positionen zulassenden Formschlussmittels kann erreicht werden, wenn das Formschlussmittel eine umlaufende Verzahnung aufweist. Die Verzahnung kann hierbei zwei Zahnelemente aufweisen, beispielsweise ein Zahnelement an jedem der beiden Rohrelemente, die bei einem Aneinanderfügen der Rohrelemente ineinander eingreifen.

Die Verzahnung kann durch ein spanabhebendes Verfahren einfach hergestellt werden, wenn sie in Radialrichtung weisend ausgeführt ist. Die Richtungsangabe ist hierbei so zu verstehen, dass die Berge der Verzahnung in Radialrichtung gegenüber den Tälern hervorstehen.

Ist die Verzahnung in einer weiteren Ausführungsform der Erfindung in Axialrichtung weisend ausgeführt, kann das Formschlussmittel sehr kompakt sein.

Es wird außerdem vorgeschlagen, dass die beiden Rohrelemente jeweils korrespondierende Konusse eines Konussitzes aufweisen, die zum Pressen und Abdichten der beiden Rohrelemente gegeneinander vorgesehen sind. Es kann eine stabile, auch hohen Drücken standhaltende Rohrverbindung geschaffen werden, die einfach montierbar und demontierbar ist und insbesondere ohne zusätzliche Dichtungen auskommt.

Ein guter Schutz des Formschlussmittels gegen Beschädigung kann erreicht werden, wenn die Rohrverbindung ein Dichtelement zum Abdichten der beiden Rohrelemente gegeneinander aufweist, und das Formschlussmittel innenseitig des Dichtelements angeordnet ist. Das Formschlusselement ist in montiertem Zustand von außen unzugänglich und hierdurch zuverlässig durch Einwirkung von außen geschützt.

Um ein passgenaues Aneinanderfügen, insbesondere Ineinanderfügen der Rohrelemente nicht zu behindern, ist das Formschlussmittel im aneinander befestigten Zustand der beiden Rohrelemente durch ein Spiel der beiden Rohrelemente in Radialrichtung zueinander gekennzeichnet. Dieses Spiel ist zweckmäßigerweise so weit gefasst, dass das Formschlussmittel im aneinander bzw. ineinander gefügten Zustand eine Bewegung der Rohrelemente sowohl in Axialrichtung als auch in Radialrichtung relativ zueinander zulässt.

Die Erfindung findet eine besonders vorteilhafte Anwendung in einer Brennstoffzuleitung einer Gasturbine.

In einer vorteilhaften Ausgestaltung dieser Erfindung bilden die Rohrelemente zumindest einen Teil einer Stichleitung von einer Ringleitung zu einem Brenner. Der Brenner kann besonders einfach und montagefreundlich von der Ringleitung bzw. der Stichleitung getrennt werden, so dass eine einfache und zügige Wartung des Brenners ermöglicht wird.

Eine Wartungsfreundlichkeit kann noch weiter erhöht werden, wenn zumindest eines der Rohrelemente an einer flexiblen Leitung gehalten ist. Bei einer Wartung kann die Rohrverbindung gelöst und der gelöste Rohrstrang mit der flexiblen Leitung zur Seite gelegt werden, ohne dass die Leitung - wie bei einer starren Leitung - an einer weiteren Stelle getrennt werden muss, um eine Bewegung der Leitung zu ermöglichen. Durch die Rohrverbindung in der flexiblen Brennstoffzuleitung kann ein Aufbringen eines Torsionsmoments an der gegen ein solches Moment sehr empfindlichen Leitung wirksam verringert, insbesondere vermieden werden. Unter einer flexiblen Leitung kann im Folgenden eine Leitung verstanden werden, die bei gelöster Rohrverbindung und ansonsten betriebsbereit befestigtem Rohrelement durch eine beschädigungsfreie Bewegung aus dem Bereich der gespannten Rohrverbindung herausbewegt werden kann.

Die Erfindung wird anhand von Ausführungsbeispielen näher erläutert, die in den Zeichnungen dargestellt sind.

### Es zeigen:

FIG 1 einen Ausschnitt aus einer Gasturbine mit einem Verdichter- und einem Turbinenteil und einer Brennstoffzuführung,
FIG 2 zwei Rohrelemente mit einer Außenverzahnung bzw. Innenverzahnung in einer perspektivischen Darstellung, die zusammen ein Formschlussmittel bilden,
FIG 3 die beiden Rohrelemente in zusammengefügter Form,
FIG 4 eine Schnittdarstellung durch die beiden Rohrelemente aus FIG 3,
FIG 5 ein vergrößertes Detail aus FIG 4,
FIG 6 zwei weitere Rohrelemente mit einem alternativen Formschlussmittel und
FIG 7 zwei Rohrelemente mit einem weiteren Formschlussmittel.

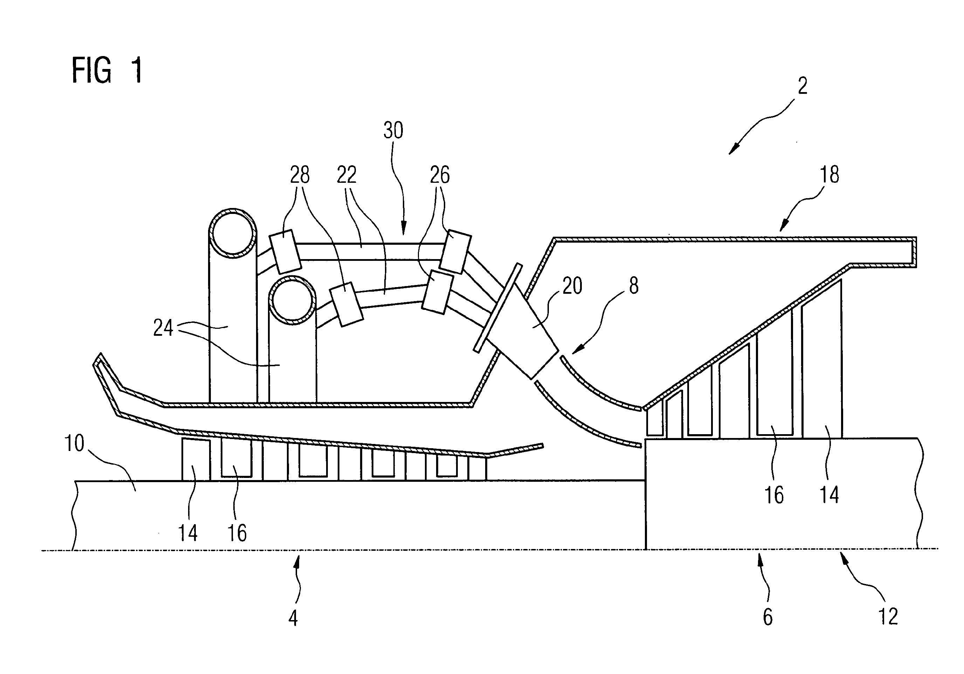

FIG 1 zeigt einen Ausschnitt aus einer Gasturbine 2 in einer geschnittenen und schematischen Darstellung. Die Gasturbine 2 umfasst einen Verdichterteil 4, einen Turbinenteil 6 und eine dazwischen liegende Brennkammer 8. An einer Welle 10 eines Läufers 12 sind sowohl im Verdichterteil 4 als auch im Turbinenteil 6 Laufschaufelreihen 14 angeordnet, die zwischen Leitschaufelreihen 16 eines Ständers 18 greifen. Angrenzend an die Brennkammer 8 sind ringförmig vierundzwanzig Brenner 20 angeordnet, durch die Brennstoff verbrannt und deren Abgase der Brennkammer 8 zugeführt werden. Der Brennstoff wird den Brennern 20 über Stichleitungen 22 zugeführt, durch die die Brenner 20 jeweils mit zwei Ringleitungen 24 verbunden sind, die ihrerseits mit einer nicht dargestellten Brennstoffversorgungsleitung bzw. Brenngasversorgungsleitung verbunden sind. Die Stichleitungen 22 sind jeweils über zwei Rohrverbindungen 26, 28 mit der entsprechenden Ringleitung 24 bzw. einem Brenner 20 verbunden. Die Ringleitungen 24 bilden zusammen mit den Stichleitungen 22 und Rohrverbindungen 26, 28 eine Brennstoffzuleitung 30.

Zur Wartung oder zu einem Austausch eines Brenners 20 werden die beiden Rohrverbindungen 26, die ihn mit der jeweiligen Stichleitung 22 verbinden, gelöst, wodurch die Enden der Stichleitungen 22 ein Stück weit vom Brenner 20 entfernt werden können. Dies wird ermöglicht, indem die Stichleitungen 22 als flexible Leitungen ausgeführt sind, so dass diese aus einem Bereich, den eine Rohrverbindung 26 in einem Betrieb der Gasturbine 2 einnimmt, herausgeführt werden kann. Die Enden der Stichleitungen 22 werden dann beispielsweise an einem dafür vorgesehenen Platz abgelegt. Nun kann der Brenner 20 herausgenommen und überholt oder ausgetauscht werden.

Zur anschließenden Montage des Brenners 20 wird dieser an seinem Betriebsplatz an der Brennkammer 8 positioniert, dort befestigt, und die beiden Stichleitungen 22 werden mit Hilfe der Rohrverbindungen 26 mit dem Brenner 20 verbunden. Die beiden Rohrverbindungen 28, die die Stichleitungen 22 mit den beiden Ringleitungen 24 verbinden, müssen bei diesem Vorgang nicht gelöst werden. Sie können daher beispielsweise als Flansch ausgeführt sein. Vorteilhafterweise sind sie jedoch ebenso wie die Rohrverbindungen 26 ohne verlierbare Teile ausgeführt, wie in den FIGen 2 bis 5 dargestellt ist.

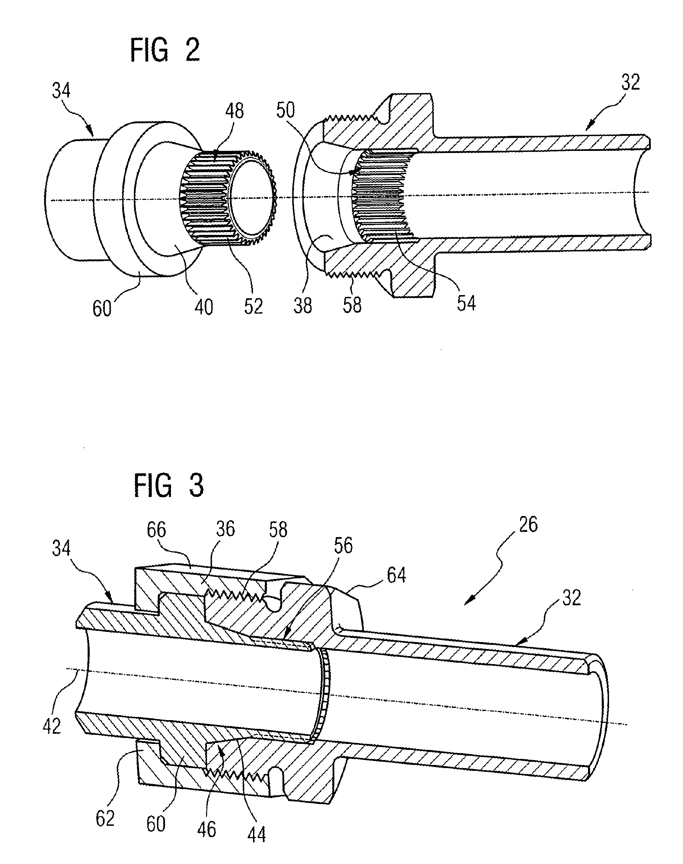

FIG 2 zeigt zwei Rohrelemente 32, 34 eines der Rohrverbinder 26, 28 aus FIG 1 in einer perspektivischen Darstellung. FIG 3 zeigt einen Rohrverbinder 26, bei dem die beiden Rohrelemente 32, 34 durch ein als Überwurfmutter ausgeführtes Spannelement 36 in Axialrichtung zusammengepresst sind.

Die beiden Rohrelemente 32, 34 sind jeweils mit einem Konus 38, 40 versehen, wobei der Konus 38 als Innenkonus und der Konus 40 als Außenkonus ausgeführt sind. Beide Konusse 38, 40 sind mit einem Winkel von beispielsweise 24° gegen eine Rohrachse 42 geneigt und bilden einen Konussitz 44, der eine Dichtung 46 bildet. Diese Dichtung 46 dichtet einen Rohrinnenraum gegen einen Rohraußenraum ab.

An einem seiner Enden ist das Rohrelement 34 mit einer Verzahnung 48 versehen, deren Zähne in Axialrichtung ausgerichtet sind und mit ihren Erhebungen in Radialrichtung weisen. Korrespondierend zu der Verzahnung 48 trägt das Rohrelement 32 eine weitere Verzahnung 50, die als Innenverzahnung und ebenso wie die Verzahnung 48 umlaufend ausgeführt ist. Die Verzahnungen 48 tragen vierzig gleichmäßig über den Umfang des Rohrelements 32 bzw. 34 angeordnete Zähne, die als Formschlusselemente 52, 54 in die entsprechende Formschlusselemente 54, 52 bildenden Zähne der Verzahnung 50 bzw. 48 eingreifen, wenn die beiden Rohrelemente 32, 34 miteinander verbunden sind. Da die Formschlusselemente 52, 54 jeweils alle gleich ausgeführt sind, kann das Rohrelement 34 in vierzig diskreten und voneinander verschiedenen Positionen in das Rohrelement 32 eingesteckt werden, so dass die Formschlusselemente 52, 54 ineinander eingreifen. Auf diese Weise bilden die Formschlusselemente 52, 54 bzw. die Verzahnungen 48, 50 gemeinsam ein Formschlussmittel 56, durch das das in das Rohrelement 32 eingesteckte Rohrelement 34 in Umfangsrichtung beidseitig formschlüssig mit dem Rohrelement 32 verbunden ist.

Zur Montage des Brenners 20 wird der an der Brennkammer 8 positionierte Brenner 20 mit den Stichleitungen 22 verbunden. Hierzu wird das Rohrelement 34 mit dem Spannelement 36 versehen und an die Stichleitung 22 angeschweißt. Das Rohrelement 32 wird an eine entsprechende Zuleitung des Brenners 20 angeschweißt. Durch die Flexibilität der Stichleitung 22 kann das Rohrelement 34 mit der Hand in das Rohrelement 32 eingesteckt werden, ohne dass das Rohrelement 32 bewegt werden muss, wobei die Formschlusselemente 52, 54 in Eingriff kommen und ein Verdrehen der Rohrelemente 32, 34 gegeneinander verhindern.

Nun wird das mit einem Innengewinde versehene Spannelement 36 auf ein Außengewinde 58 des Rohrelements 32 aufgeschraubt und so das Rohrelement 34 in das Rohrelement 32 eingedrückt. Hierfür hintergreift das Spannelement 36 einen Bund 60 des Rohrelements 34 mit einer entsprechenden Ausformung 62 und presst so die beiden Konusse 38, 40 dichtend aneinander. Zum Erzeugen dieser in Umfangsrichtung gerichteten Spannbewegung des Spannelements 36 wird das Rohrelement 32 an hierfür ausgerichteten Flächen 64, die beispielsweise ein für Schraubverbindungen übliches Sechseck bilden, mit Hilfe beispielsweise eines Schraubenschlüssels fixiert. Mit einem zweiten an entsprechenden Flächen 66 des Spannelements angreifenden Schraubenschlüssel kann nun das Spannelement 36 in seine Spannbewegung versetzt werden, wodurch die beiden Rohrelemente 32, 34 gegeneinander verspannt werden.

Die Ausformung 62 greift hierbei am Bund 60 an und überträgt eine Kraft in Umfangsrichtung auf das Rohrelement 34. Diese Kraft wird durch das Formschlussmittel 56 auf das Rohrelement 32 übertragen und kann dort mit Hilfe des ersten Schraubenschlüssels aufgefangen werden. Auf diese Weise kann ein Mitdrehen des Rohrelements 34 mit dem Spannelement 36 mit Hilfe des Formschlussmittels 56 verhindert, bzw. im Falle eines geringen Spiels im Formschlussmittel 56 nach einer unerheblichen Drehbewegung des Rohrelements 34 gestoppt werden. Ein Aufbringen eines Torsionsmoments auf die Stichleitung 22 wird somit wirksam verhindert.

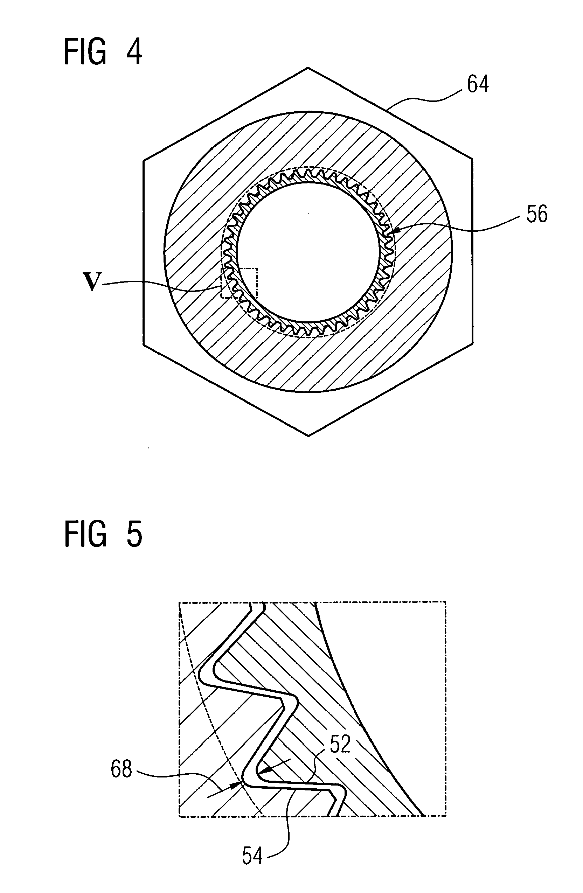

FIG 4 zeigt einen Querschnitt durch die Rohrelemente 32, 34 in Höhe des Formschlussmittels 56. In FIG 5 ist ein Ausschnitt aus diesem Querschnitt dargestellt. Es ist zu erkennen, dass die beiden Formschlusselemente 52, 54 im ineinander gefügten Zustand der Rohrelemente 32, 34 in Radialrichtung ein Spiel 68 aufweisen. Das Spiel 68 beträgt etwa 1 mm. Durch dieses Spiel 68 sind die Formschlusselemente 52 rund um das Rohrelement 34 von den Formschlusselementen 54 ringsum gleichmäßig beabstandet. Auf diese Weise ist sichergestellt, dass die Formschlusselemente 52, 54 nicht die Positionierung des Konus 40 im Konus 38 beeinflusst und die beiden Konusse 38, 40 in zur Dichtung vorgesehenen Weise aneinander anliegen. Das Spiel 68 ist so groß gewählt, dass die beiden Verzahnungen 48, 50 bzw. Formschlusselemente 52, 54 bei eingehaltenen Fertigungstoleranzen der zusammengepressten Rohrelemente 32, 34 stets umlaufend radial voneinander beabstandet sind, um eine Beeinflussung der radialen und axialen Positionierung der beiden Konusse 38, 40 aufeinander sicher zu vermeiden. Durch das Spiel 68 sind die beiden Rohrelemente 32, 34 auch in Umfangsrichtung mit einem Spiel ineinander gehalten. Die Formgebung der Formschlusselemente 52, 54 ist jedoch so gehalten, dass dieses Spiel in Umfangsrichtung eine nur vernachlässigbare Verdrehung der Stichleitung 22 nach einem Zusammenstecken bewirkt.

In den FIGen 6 und 7 sind alternative Rohrverbindungen 70, 72 dargestellt. Die nachfolgende Beschreibung beschränkt sich im Wesentlichen auf die Unterschiede zum Ausführungsbeispiel in den FIGen 1 bis 5, auf das bezüglich gleich bleibender Merkmale und Funktionen verwiesen wird. Im Wesentlichen gleich bleibende Bauteile sind grundsätzlich mit den gleichen Bezugszeichen beziffert.

Die Rohrverbindung 70 umfasst zwei Rohrelemente 74, 76, die im Wesentlichen ausgeführt sind wie die Rohrelemente 32, 34, jedoch ein alternatives Formschlussmittel 78 aufweisen. Das Formschlusselement 78 umfasst zwei Verzahnungen 80, 82 mit jeweils 32 Zähnen, die gleichmäßig um die Rohrachse 42 herum angeordnet sind. Die Zähne sind in Radialrichtung ausgerichtet und umfassen Berge und Täler, die in Axialrichtung weisend ausgeführt sind.

Zur Montage der Rohrverbindung 70 werden die Rohrelemente 74, 76 ineinander gesteckt, wobei die Verzahnungen 80, 82 ineinander greifen, kurz bevor die beiden Konusse des Konussitzes 44 aneinander zu liegen kommen. Bei einem Verspannen der beiden Rohrelemente 74, 76 durch das Spannelement 36 kann durch die Formschlussverbindung des Formschlussmittels 78 somit ein Mitdrehen des Rohrelements 74 mit dem Spannelement 36 verhindert werden.

In einer alternativen Ausgestaltung ist es möglich, an entsprechend zugewandten Flächen 84, 86 der Rohrelemente 74, 76 Verzahnungen zu formen, die beispielsweise analog wie die Verzahnungen 80, 82 ausgeführt sind. Ein Formschluss in Umfangsrichtung findet nun zwischen diesen Verzahnungen statt, so dass auf die Verzahnungen 80, 82 verzichtet werden kann.

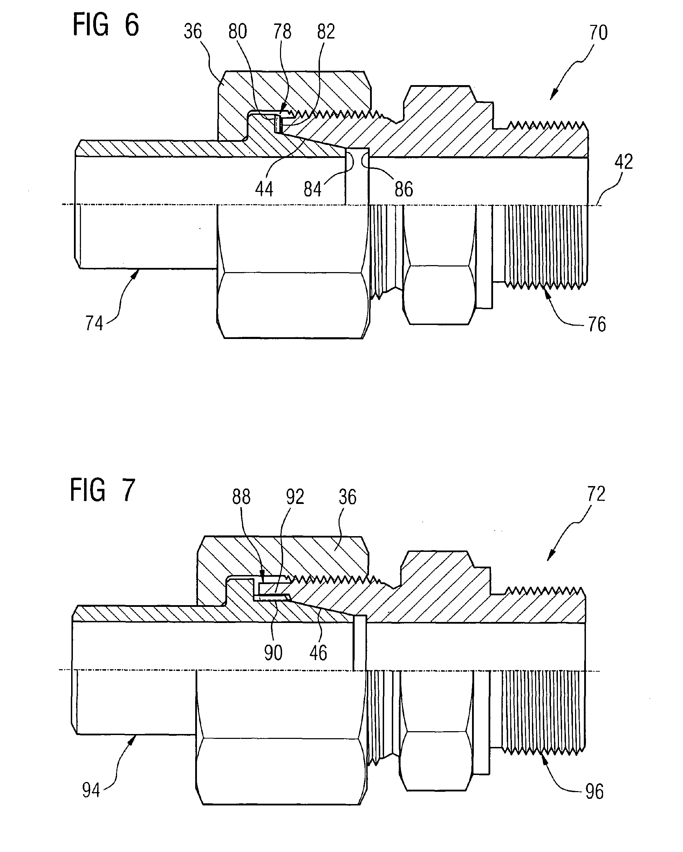

Anhand der Rohrverbindung 72 ist in FIG 7 eine weitere Möglichkeit zur Anordnung eines Formschlussmittels 88 gezeigt. Analog zum Formschlussmittel 56 ist eine Verzahnung 90 und eine Verzahnung 92 an einem Rohrelement 94 bzw. 96 mit sich radial erhebenden Zähnen ausgeführt. Bei einem Zusammenstecken der Rohrelemente 94, 96 werden die Verzahnungen 90, 92 entlang ihrer Zähne ineinander geschoben und können so ein Mitdrehen des Rohrelements 94 mit dem Spannelement 36 wirksam verhindern. Analog zu dem in FIG 5 gezeigten Spiel 68 ist auch bei einem solchen Formschlussmittel 88 ein entsprechendes Spiel vorteilhaft.

Während das Formschlussmittel 88 in FIG 7 außerhalb der Dichtung 46 angeordnet ist, ist das Formschlussmittel 56 innerhalb der Dichtung 46, also in dem von der Dichtung 46 abgedichteten Raum, angeordnet. Durch die innen liegende Anordnung des Formschlussmittels 56 ist dieses gegen Einflüsse von außen, beispielsweise eine Verschmutzung oder dergleichen, geschützt. Demgegenüber ist das außen liegende Formschlussmittel 88 gegen Ablagerungen geschützt, die gegebenenfalls von einem durch die Rohrelemente 94, 96 fließenden Medium erzeugt werden. Von daher kann - je nach Gebrauch der Rohrverbindung 26, 28, 72 - eine entsprechende Anordnung des Formschlussmittels 56, 88 sinnvoll sein. Das Gleiche gilt für die Verzahnungen 80, 82, die ggf. an den Flächen 84, 86 ausgeführt sein können.

## Patentansprüche

1. Rohrverbindung (26, 28; 70; 72) mit zwei Rohrelementen (32, 34; 74, 76; 94, 96) und einem um zumindest ein Rohrelement (32, 34; 74, 76; 94, 96) geführten Spannelement (36), das zu einem Pressen der Rohrelemente (32, 34; 74, 76; 94, 96) gegeneinander durch eine Spannbewegung des Spannelements (36) in Umfangsrichtung relativ zu beiden Rohrelementen (32, 34; 74, 76; 94, 96) vorgesehen ist,
**gekennzeichnet durch** ein Formschlussmittel (56; 78; 88) zum formschlüssigen Verbinden der beiden Rohrelemente (32, 34; 74, 76; 94, 96) in Umfangsrichtung miteinander.

2. Rohrverbindung (26, 28; 70; 72) nach Anspruch 1,
**dadurch gekennzeichnet, dass** das Formschlussmittel (56; 78; 88) zum formschlüssigen Verbinden der beiden Rohrelemente (32, 34; 74, 76; 94, 96) in Umfangrichtung miteinander während der Spannbewegung des Spannelements (36) vorgesehen ist.

3. Rohrverbindung (26, 28; 70; 72) nach Anspruch 1 oder 2,
**dadurch gekennzeichnet, dass** die beiden Rohrelemente (32, 34; 74, 76; 94, 96) durch das Formschlussmittel (56; 78; 88) in einer Vielzahl von verschiedenen Positionen formschlüssig aneinander fügbar sind.

4. Rohrverbindung (26, 28; 70; 72) nach einem der vorhergehenden Ansprüche,
**dadurch gekennzeichnet, dass** das Formschlussmittel (56; 78; 88) mehrere gleiche Formschlusselemente (52, 54) aufweist.

5. Rohrverbindung (26, 28; 70; 72) nach einem der vorhergehenden Ansprüche,
**dadurch gekennzeichnet, dass** das Formschlussmittel (56; 78; 88) eine umlaufende Verzahnung (48, 50; 80, 82; 90, 92) aufweist.

6. Rohrverbindung (26, 28; 72) nach Anspruch 5,
**dadurch gekennzeichnet, dass** die Verzahnung (48, 50; 90, 92) in Radialrichtung weisend ausgeführt ist.

7. Rohrverbindung (70) nach Anspruch 5 oder 6,
**dadurch gekennzeichnet, dass** die Verzahnung (80, 82) in Axialrichtung weisend ausgeführt ist.

8. Rohrverbindung (26, 28; 70; 72) nach einem der vorhergehenden Ansprüche,
**dadurch gekennzeichnet, dass** die beiden Rohrelemente (32, 34; 74, 76; 94, 96) jeweils korrespondierende Konusse (38, 40) eines Konussitzes (44) aufweisen, die zum Pressen und Abdichten der beiden Rohrelemente (32, 34; 74, 76; 94, 96) gegeneinander vorgesehen sind.

9. Rohrverbindung (26, 28; 70) nach einem der vorhergehenden Ansprüche,
**gekennzeichnet durch** eine Dichtung (46) zum Abdichten der beiden Rohrelemente (32, 34; 74, 76) gegeneinander, wobei das Formschlussmittel (56; 88) innenseitig der Dichtung (46) angeordnet ist.

10. Rohrverbindung (26, 28; 70; 72) nach einem der vorhergehenden Ansprüche,
**dadurch gekennzeichnet, dass** das Formschlussmittel (56; 78; 88) im aneinander befestigten Zustand der beiden Rohrelemente (32, 34; 74, 76; 94, 96) ein Spiel (68) der beiden Rohrelemente (32, 34; 74, 76; 94, 96) in Radialrichtung zueinander aufweist.

11. Brennstoffzuleitung (30) einer Gasturbine (2) mit einer Rohrverbindung (26, 28; 70; 72) nach einem der vorhergehenden Ansprüche.

12. Brennstoffzuleitung (30) nach Anspruch 11,
**dadurch gekennzeichnet, dass** die Rohrelemente (32, 34; 74, 76; 94, 96) zumindest einen Teil einer Stichleitung (22) von einer Ringleitung (24) zu einem Brenner (20) bilden.

13. Brennstoffzuleitung nach Anspruch 11 oder 12,
**dadurch gekennzeichnet, dass** die Stichleitung (22) mit einer solchen Flexibilität ausgeführt ist, dass das an ihr befestigte Rohrelement (32; 74; 94) bei gelösten Rohrverbindung (26, 28; 70; 72) und ansonsten betriebsbereit befestigtem Rohrelement (32; 74; 94) durch beschädigungsfreie Bewegung aus dem Bereich der gespannten Rohrverbindung (26, 28; 70; 72) heraus bewegbar ist.
